# EUROPÄISCHE PATENTANMELDUNG

(11) **EP 1 043 590 A1**
(43) Veröffentlichungstag der Anmeldung: **11.10.2000**
(21) Anmeldenummer: 00106856.8
(22) Anmeldetag: 30.03.2000
(51) Int. Cl.: G01P 3/48

(54) **Verfahren und Vorrichtung zur Messung Drehzahl eines Gleichstrom-Kommutatormotors**

(30) Priorität: 08.04.1999 DE 19915875
(71) Anmelder: HKR Climatec GmbH, 74653 Künzelsau (DE)
(72) Erfinder: Oechsener, Norbert Paul, Dipl.-Ing. FH, 74747 Ravenstein (DE); Bass, Wolfgang, Dipl.-Ing. FH, 74626 Bretzfeld-Adolzfurt (DE)
(74) Vertreter: Nöth, Heinz, Dipl.-Phys.

(57) **Zusammenfassung**

Ein Verfahren und eine Vorrichtung zur Messung der Drehzahl eines Gleichstrom-Kommutatormotors 1, bei dem aus einem vom Motor verursachte Signalschwankungen enthaltenden Eingangssignal durch Signalaufbereitung, z.B. Entfernen hochfrequenter Störungen, ein elektrisches Schwankungssignal gebildet wird. In einer Auswerteeinrichtung wird mittels Frequenzanalyse des Schwankungssignals und Bezugnahme auf Motorsignale, welche vom Motor verursachte Signalschwankungen noch enthalten, und feste Motorparameter die Drehzahl ermittelt.

Die Frequenzanalyse beeinhaltet eine Fourier-Transformation, speziell eine FFT.

Mit Hilfe der Motorsignale (Strom, Spannung oder EMK) wird ein Frequenzfenster definiert, in dem ein Maximum der Amplitude im Spektrum gesucht wird. Unter Berücksichtigung fester Parameter des Motors, z.B. Kollektor-Lamellenzahl, läßt sich die Drehzahl aus diesen Maximum ermitteln.

Alternativ kann ein geschätzter Ist-Wert durch ein Korrektursignal, welches sich aus einem Vergleich mit dem aus der Frequenzanalyse erhaltenen Drehzahlwert ergibt, korrigiert werden.

## Beschreibung

Die Erfindung betrifft ein Verfahren und eine Vorrichtung zur Messung der Drehzahl eines Gleichstrom-Kommutatormotors, bei denen vom Motor verursachte elektrische Signalschwankungen ausgewertet werden.

### [Stand der Technik]

In herkömmlicher Weise werden für die Drehzahlerfassung bei Gleichstrommotoren zusätzliche Geber am Motor eingesetzt. Dies bedeutet mechanischen Aufwand, zusätzliche Leitungen und einen größeren Raumbedarf. Bekannt ist ferner, die Schwankungen im Motorstrom auszuwerten (DE 16 73 364). Dabei werden die durch den Stromwechsel von einer Kollektorlamelle zur nächsten Lamelle verursachten Stromschwankungen, gegebenenfalls nach Verstärkung, einer Impulsformerstufe zugeführt, an deren Ausgang ein Meßgerät zur Anzeige der Drehzahl angeschlossen ist. Aus der DD 254 254 A1 ist ein Verfahren bekannt, bei dem die Drehzahl durch spannungsgesteuerte Filter ausgewertet wird. Bei den bekannten Verfahren und Vorrichtungen ist es erforderlich, die Komponenten der Drehzahlmeßeinrichtung an die jeweiligen Motore, an denen die Drehzahlmessung durchzuführen ist, anzupassen, um Toleranzunterschiede auszugleichen. Ferner ergeben sich nach längerer Betriebsdauer Änderungen am Motor, beispielsweise in den Lagern oder am Kommutator, und andere verschleißbedingte Änderungen, welche die Drehzahlmessung beeinflussen.

Aus der DE 197 29 238 C1 ist es bekannt, zur Ermittlung der Drehzahl eines Gleichstrommotors, parallel zur Erfassung der Welligkeit (Ripple) des Motorstroms, aus einem Motorzustandsmodel, dem die elektromechanischen Motorgleichungen zugrundeliegen, aus Motorstrom und Motorspannung einen zulässigen Soll-Zeitbereich zu bestimmen und die Zeitpunkte der Kommutierung nur dann bei der Auswertung zu berücksichtigen, wenn diese in diesem Soll-Zeitbereich liegen und falls innerhalb dieses Soll-Zeitbereichs keine Welligkeit einer Kommutierung zugeordnet werden kann, ein wahrscheinlicher Kommutierungszeitpunkt aus dem Motorzustandsmodel extrapoliert wird. Bei diesem bekannten Verfahren wird ebenfalls aus den Kommutierungszeitpunkten die Motordrehzahl abgeleitet.

### [Aufgabe der Erfindung]

Aufgabe der Erfindung ist es, ein Verfahren und eine Vorrichtung der eingangs genannten Art zu schaffen, welche bei beliebigen Typen von Gleichstrom-Kommutatormotoren einsetzbar ist und über eine lange Betriebsdauer hin eine genaue Drehzahlbestimmung sicherstellt.

Diese Aufgabe wird erfindungsgemäß beim Verfahren durch die Merkmale des Patentanspruches 1 und bei der Vorrichtung durch die Merkmale des Patentanspruches 26 gelöst. In den Unteransprüchen sind Weiterbildungen der Erfindung angegeben.

Bei der Erfindung wird mittels Frequenzanalyse das Frequenzverhalten eines elektrischen Schwankungssignals, das aus vom Motor verursachten Signalschwankungen insbesondere des Motorstroms und/oder einer am Motor abgenommenen Spannung aufbereitet wurde, ermittelt und das Frequenzverhalten mit Motorparametern, welche feste Motordaten sind, und mit absoluten elektrischen Motorsignalen zur Gewinnung der Drehzahl, z.B. durch Vergleich in Bezug gesetzt. Zur Ermittlung der Drehzahl wird kein Sensor benötigt. Als absolute Motorsignale werden der Motorstrom und/oder die vom Motor abgenommene Motorspannung und/oder die Motor-EMK, welche die vom Motor verursachten Signalschwankungen aufweisen, und als Motorparameter feste Motordaten, insbesondere Kollektorlamellenanzahl und/oder Polpaarzahl und/oder die maximale Drehzahl und dergleichen verwendet. In bevorzugter Weise wird aus dem Frequenzverhalten, welches von einem durch Fourier-Transformation gebildeten Amplitudenspektrum wiedergegeben sein kann, ein innerhalb eines oder mehrerer Frequenzfenster liegendes Amplitudenteilspektrum, welches die für die Drehzahlermittlung erforderlichen Frequenzen umfaßt, ausgesondert. Das bzw. die Frequenzfester werden aus den absoluten Motorsignalen und Motorparametern des Motors bestimmt. Aus den Motorparametern lassen sich mehrere Frequenzfenster bilden, welche die Umlauffrequenz des Motorankers, die Kollektorfrequenz und dergleichen beinhalten können. Bei der Frequenzanalyse durch Fourier-Transformation des elektrischen Schwankungssignals können Algorithmen zum Einsatz kommen, wie sie beispielsweise in der Veröffentlichung von Cooley und Tukey, 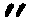 An Algorithm for the Machine Calculation of complex Fourier Series". Math. Comput., Band 19 April, 1965 beschrieben sind.

Zur Gewinnung des Zeitverlaufs des aus dem Motorstrom und/oder der Motorspannung und/oder der Motor-EMK aufbereiteten Schwankungssignals, aus welchem das Frequenzverhalten durch Fourier-Transformation ermittelt wird, werden während eines bestimmten Zeitraums mehrere Werte, beispielsweise 128 Werte des elektrischen Schwankungssignals erfaßt und gegebenenfalls für die Auswertung gespeichert. Hieran schließt sich die Ermittlung des Frequenzverhaltens, insbesondere durch die angesprochene Fourier-Transformation des kompletten, die beispielsweise 128 Werte enthaltenden Signals an. In periodisch wiederkehrenden Zeitabläufen werden diese bestimmte Anzahl an Signalwerten in vorzugsweise exakt gleichen zeitlichen Abständen erfaßt. Es können auch andere geeignete Algorithmen zum Einsatz kommen. Anstelle einer Auswertung am Ende eines Auswertungszeitraumes kann auch eine rekursive Frequenzanalyse durchgeführt werden, bei welcher eine ständige Anpassung an neue genaue Meßsignale erreicht wird.

Die Erfindung ist bei der Ermittlung der Motordrehzahl nicht an die mehr oder weniger exakte Erfassung der Kommutierungszeitpunkte, welche nach längerer Betriebsdauer aufgrund von Verschleißerscheinungen Änderungen unterliegen können und damit die exakte Drehzahlmessung beeinflussen, gebunden.

Durch die erfindungsgemäße Frequenzanalyse und das daraus gewonnene Frequenzverhalten gewinnt man auch bei verschleißbedingten Änderungen, insbesondere der mechanischen Elemente des Motors und bei Änderungen der elektrischen Eigenschaften, wie Impulsform, und bei Störsignalen, eine Basis für die exakte Drehzahlermittlung.

Änderungen, welche sich während einer langen Betriebszeit im Motor ergeben, beeinflussen die Beziehungen des bei der Erfindung gewonnenen Frequenzverhaltens des elektrischen Schwankungssignals zur jeweiligen Drehzahl des Motors nicht. Am Schaltungsaufbau müssen keine Änderungen vorgenommen werden. Zusätzliche Einrichtungen, welche bei Gebern und bekannten Drehzahlerfassungssystemen, beispielsweise in Form von separaten Leitungen und dergleichen, erforderlich sind, erübrigen sich bei der Erfindung.

Die gemessene Drehzahl kann für die verschiedensten Zwecke verwendet werden, beispielsweise als Ist-Wert bei der Motordrehzahlregelung. Hierbei kann in bevorzugter Weise aus dem bei der Frequenzanalyse gewonnenen genauen Drehzahlwert ein Korrektursignal gebildet werden, für einen Drehzahl-Istwert, welcher aus den absoluten Motorsignalen, insbesondere dem Motorstrom und/oder der Motorspannung und/oder der Motor-EMK gebildet wurde. Der korrigierte Drehzahl-Istwert wird dann in Beziehung gesetzt zu einem Drehzahl-Sollwert und hieraus ein Stellsignal zur Regelung des Motors auf die gewünschte Drehzahl gebildet. Insbesondere im Zusammenhang mit dem Vermeiden von unerwünschten Motordrehzahlen, die sich dann ergeben können, wenn der Motor innerhalb eines schwingungsfähigen Systems verwendet wird. Es können aufgrund der exakt ermittelten Drehzahl unerwünschte Resonanzen, die sich bei bestimmten Drehzahlen einstellen, im schwingungsfähigen System vermieden werden. Erreicht wird dies durch eine entsprechende die Resonanzdrehzahlen ausblendende Motordrehzahlregelung in Abhängigkeit von den gemäß der Erfindung ermittelten Motordrehzahlen. Ferner kann aus dem Frequenzverhalten auf Verschleißerscheinungen am Motor geschlossen werden. Das Frequenzverhalten kann somit für eine Motordiagnose verwendet werden.

### [Beispiele]

Anhand der Figuren wird an einem Ausführungsbeispiel die Erfindung noch näher erläutert.

Es zeigt:
- Fig. 1: ein Blockschaltbild eines Ausführungsbeispiels;
- Fig. 2: ein Beispiel eines erfaßten Zeitverlaufs mit einer bestimmten Anzahl an Werten eines Stromschwankungssignals;
- Fig. 3: ein aus dem Zeitverlauf der Figur 2 durch Fourier-Transformation ermitteltes Frequenzverhalten;
- Fig. 4: den Zeitverlauf eines elektrischen Schwankungssignals, welches von einem vom Motorstrom abgeleiteten Stromschwankungssignal gebildet wird, und das Frequenzverhalten eines qualitativ schlechten Elektromotors; und
- Fig. 5: den Zeitverlauf eines elektrischen Schwankungssignal, welches von einem vom Motorstrom abgeleiteten Stromschwankungssignal gebildet wird, und das Frequenzverhalten eines qualitativ guten Elektromotors.

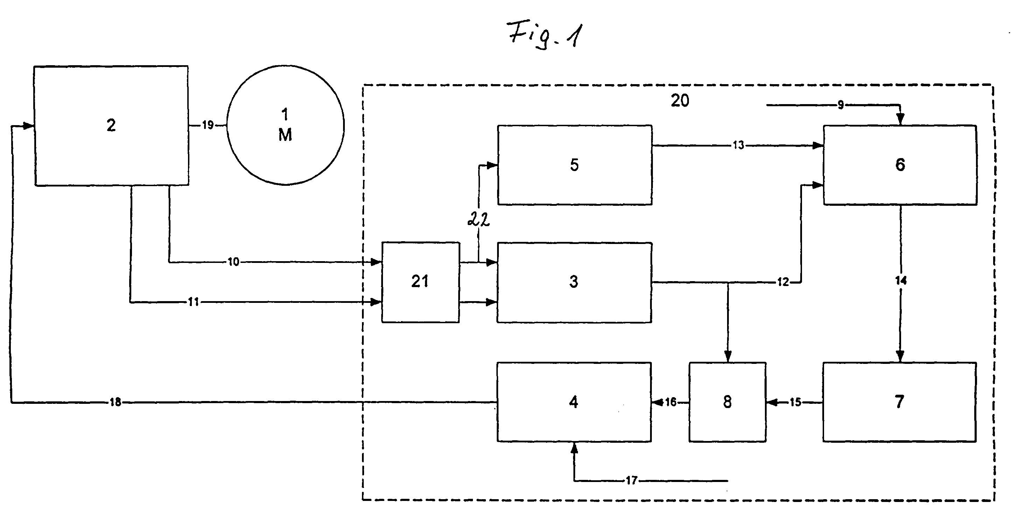

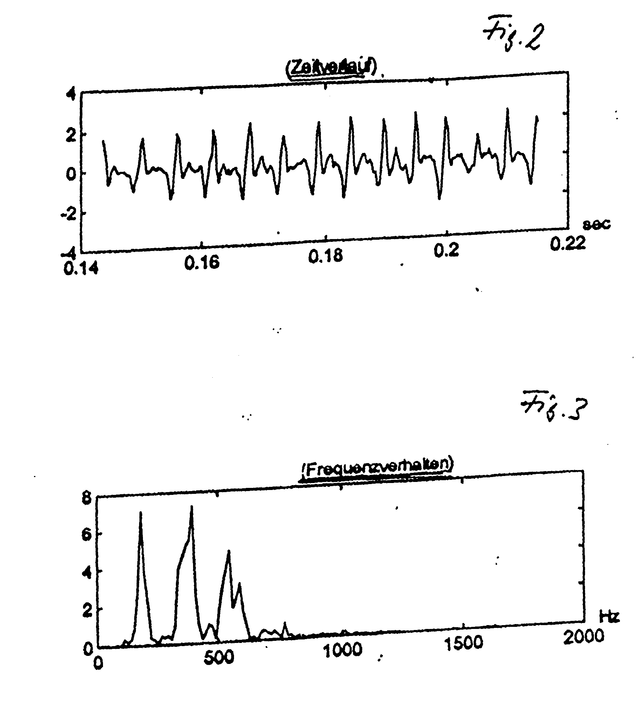

Im Ausführungsbeispiel wird ein Gleichstrom-Kommutatormotor 1 durch eine Spannungsquelle einer Leistungseinstelleinrichtung 2 gespeist. Das absolute Motorsignal kann z. B. wie es aus der DE 32 34 683 A1 bekannt ist, als über den Motor 1 abgenommene Motorspannung 11 oder als Motorstrom 10 über einen Shunt oder eine andere Impedanz z. B. wie in der DE-OS 23 10 739, oder einen Transistorinnenwiderstand gemessen werden. Ferner kann als absolutes Motorsignal die Motor-EMK verwendet werden. Das so erfaßte Signal enthält die Ungenauigkeiten und Unregelmäßigkeiten, welche durch die Motoreigenschaften bedingt sind. Wenigstens eines dieser Signale wird als Eingangssignal vom Motor 1 für die Drehzahlbestimmung verwendet. Hierzu wird das erforderliche Eingangssignal in einer Aufbereitungseinrichtung 21 von höher frequenten Störungen und gegebenenfalls vom Gleichstrom- bzw. -spannungsanteil befreit. Der Ausgang der Aufbereitungseinrichtung 21 liefert ein entsprechendes elektrisches Schwankungssignal 22, wie es beispielsweise für einen bestimmten Zeitabschnitt in der Figur 2 dargestellt ist.

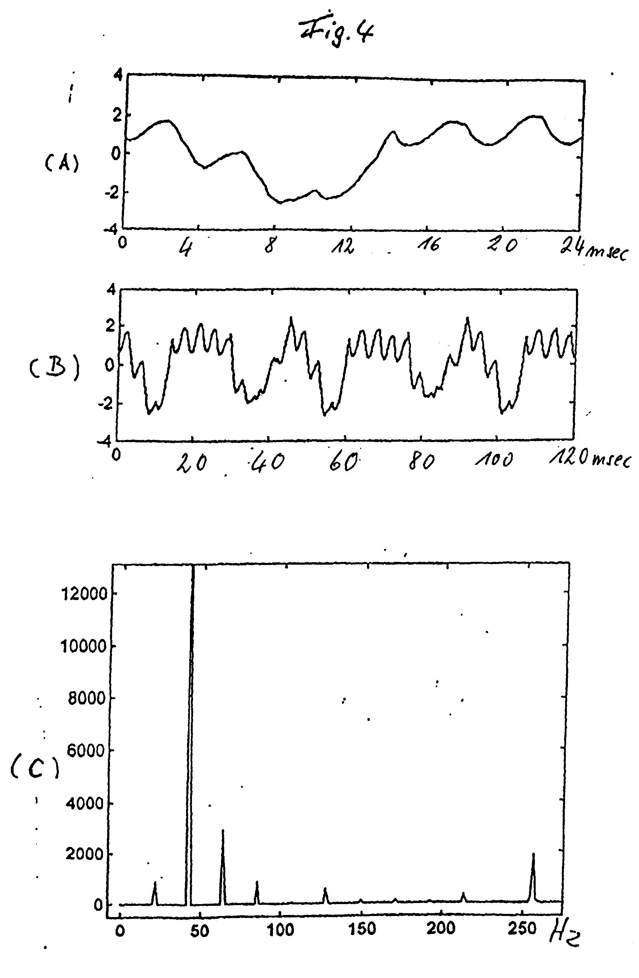

Beim Ausführungsbeispiel der Fig. 1 wird bei der Auswertung des Schwankungssignals eine Frequenzanalyse in der Frequenzanalyseeinrichtung 5 durchgeführt. Das Signal ist hierzu auf das in Figur 2 wiedergegebene Format gewandelt worden. Durch die Fourier-Transformation wird ein Amplitudenspektrum 13 gemäß Figur 3 erhalten, welches das Frequenzverhalten des Schwankungssignals wiedergibt. Die Frequenzanalyse kann mit Hilfe eines Fast-Fourier-Transformations (FFT)-Algorithmus erfolgen (Cooley and Tukey 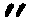 An Algorithm tor the Machine Calculation of complex Fourier Series" in Math. Comput., Band 19, April 1965). Mit geeigneter Faltung und durch Aufspalten in gleichartige Berechnungen kann die Anzahl der Multiplikationen minimiert werden. Durch Normierung auf eine Basisgenauigkeit (z.B. 8 bit) nach jeder Multiplikation und bei der Addition kann ein kleiner Prozessor gewählt werden. Man erhält eine höhere Genauigkeit der Ergebnisse, wenn man nicht auf das theoretisch mögliche Ergebnis rundet, sondern stattdessen bei Überlauf den zugehörigen Wert auf MAXIMAL setzt, z.B. bei 8 bit auf FF hex. Bei Anwendung einer mehrstufigen FFT können die letzten Schritte der FFT mit wenig mehr Aufwand in erhöhter Genauigkeit erfolgen, da hier keine Multiplikationen notwendig sind. Das Amplitudenspektrum 13, welches das Frequenzverhalten (Fig. 2) wiedergibt, wird einer Auswerteeinrichtung 6 zugeleitet. Dieser Auswerteeinrichtung 6 werden ferner Motorparameter 9, welche feste Motordaten, insbesondere Lamellenanzahl und/oder Polpaarzahl darstellen, zugeleitet. Ferner werden der Auswerteeinrichtung die Abtastzeiten bei der Analog/Digital-Wandlung des wenigstens einen Eingangssignals von Motorstrom 10 und/oder Motorspannung 11, welche in der Aufbereitungsschaltung 21 durchgeführt werden kann, zugeleitet. Der Auswerteeinrichtung wird ferner ein aus wenigstens einem der absoluten Motorsignalen Eingangssignale), wie dem Motorstrom, der Motorspannung und der Motor-EMK, berechneter Drehzahl-Istwert 12 zugeleitet. Dieser Drehzahl-Istwert wird in einer Drehzahlberechnungseinheit 3, welche an die Aufbereitungseinrichtung 21 angeschlossen ist, berechnet. Dieser Drehzahl-Istwert, welcher aus den absoluten Motorsignalen gewonnen wird, besitzt eine Schwankungsbereite bzw. Ungenauigkeit von ca. 20%, wenn der Drehzahl-Istwert aus Strom und Spannung berechnet wird. Bei der Berechnung aus der Motor-EMK beträgt die Ungenauigkeit ca. 10%. Aus dem Bereich dieser Schwankungsbreite, innerhalb welcher die Berechnung des Drehzahl-Istwertes in der Drehzahlberechnungseinheit 3 gewonnen wird, wird in der Auswerteeinrichtung 6 ein Frequenztenster gebildet, das die genaue Drehzahl enthält. Zur Ermittlung der genauen Drehzahl werden ein oder mehrere Frequenzfenster unter Zuhilfenahme des Drehzahl-Istwertes 12 und der Motorparameter 9 sowie der Abtastezeiten bei der Anlaog/Digital-Wandlung gebildet und mit dem bei der Fourier-Transformation gewonnenen Frequenzverhalten in Bezug gesetzt. Aus den Motorparametern, welche feste Motordaten darstellen, und dem Drehzahl-Istwert wird dann die genaue Drehzahl anhand des durch das bzw. die Frequenzfenster gewonnenen Teilspektrums bestimmt.

Zusätzlich können durch Vergleich der Amplituden des Amplitudenspektrums der Figur 3 mit bekannten Beziehungen, beispielsweise der Beziehung zwischen Kollektorfrequenz zur Motorfrequenz Frequenzen aussortiert werden und mit dem bzw. den aus den absoluten Motorsignalen vorgegebenen Frequenzfenster bzw. -fenstern in Bezug gesetzt werden. Das bzw. die aus den Motorsignalen gebildete bzw. gebildeten Frequenzfenster enthalten drehzahlproportionale Frequenzen, welche die Bestimmung der exakten Drehzahl beispielsweise durch Suche nach der maximalen Amplitude liefern. Durch Ermitteln des Schwerpunktes aus Amplituden mehrerer Frequenzen um ein Maximum kann die Frequenzauflösung, die durch die Berechnung der Frequenzanalyse entsteht, erhöht werden. Das Frequenzfenster kann den Bereich einer der Amplituden, z. B. den Frequenzbereich ca. 500 bis 600 Hz des Amplitudenspektrums der Fig. 3 umfassen. Dies hat den Vorteil, daß sich die ermittelte Frequenz auch in einem durch Störung verursachten Fall im vorgegebenen Frequenzfenster befindet.

Hieraus ergibt sich dann die exakte tatsächliche Drehzahl des Motors, unabhängig von Störungen, beispielsweise mechanischer Art aufgrund von Verschleiß. Da auch diese Störungen mit der Drehzahlfrequenz in das erfaßte Drehzahlschwankungssignal eingehen.

Der aus den absoluten Motorsignalen in der Drehzahlberechnungseinheit 3 insbesondere aus der Motor-EMK bestimmte Drehzahl-Istwert 12 kann auch für eine schnelle Regelung der Drehzahl ausgewertet werden, wobei dieser Drehzahl-Istwert in einem Stellsignalgeber 4 mit einem Drehzahl-Sollwert 17 in Beziehung gesetzt wird, und ein entsprechendes Stellsignal 18 an die Leistungseinstelleinrichtung 2 geliefert wird.

Durch Abgleich mit dem bei der Frequenzanalyse gewonnenen genauen Drehzahlwert 14 gewinnt man jedoch einen genauen Drehzahl-Istwert. Hierzu wird beim dargestellten Ausführungsbeispiel in einem Korrekturrechner 7 aus dem genauen Drehzahlwert 14 ein Korrektursignal 15 gebildet. Dieses Korrektursignal ist in bevorzugter Weise durch ein im Korrekturrechner 7 enthaltenes Verzögerungsglied geglättet, so daß ein im wesentlichen stetiges Korrektursignal 15 entsteht. Im Korrekturrechner 7 kann ferner eine Plausibilitätsprüfung für das Korrektursignal durchgeführt werden. In einer Korrektureinrichtung 8, welcher das Korrektursignal 15 zugeleitet wird, erfolgt eine sanfte und stetige Korrektur des von der Drehzahlberechnungseinheit 3 gelieferten Drehzahl-Istwertes 12. Die Korrektureinrichtung 8 liefert für die Drehzahlregelung einen entsprechend korrigierten Drehzahl-Istwert 16 an den Stellsignalgeber 4 für den Vergleich mit dem Drehzahl-Sollwert 17. Das Stellsignal 18, welches der Leistungseinstelleinrichtung 2 zugeleitet wird, ergibt sich aus einer exakten Drehzahlbestimmung in der Auswerteeinrichtung 6.

Die Aufbereitungseinrichtung 21, die Frequenzanalyseinrichtung 5, die Auswerteeinrichtung 6, die Drehzahlberechnungseinheit 3, der Stellsignalgeber 4, die Korrektureinrichtung 8 und der Korrekturrechner 7 können zu einer Regeleinheit 20 zusammengefaßt sein. Diese Regeleinheit 20 wird vorzugsweise mittels eines Mikrocontrollers oder einer Kombination aus einem anwenderspezifischen integrierten Bauteil und einem Mikroprocessor oder allein in einem anwenderspezifischen integrierten Baustein realisiert. Die Regeleinheit 20 enthält die hierfür erforderlichen Speicher- und Peripheriekomponenten sowie eine eigene Zeitbasis. In der Aufbereitungseinrichtung 21 erfolgt die Filterung bzw. Aufbereitung des wenigstens einen absoluten Motorsignals und gegebenenfalls eine Signalverstärkung und anschließend die Analog/Digital-Wandlung, wobei die Signalwandlung vorzugsweise in äquidistanten Zeitabschnitten erfolgt.

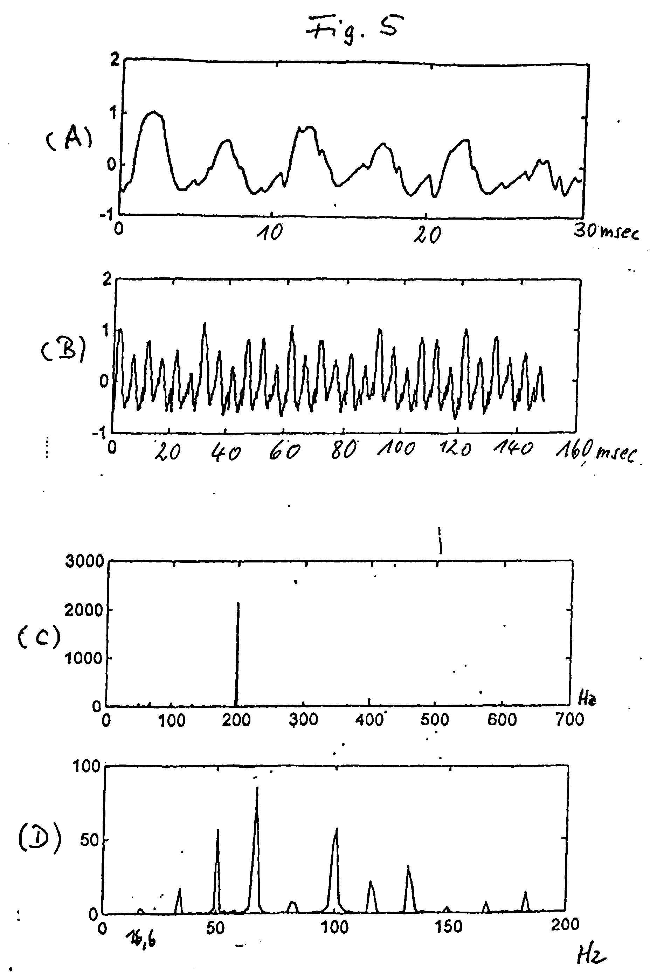

Anhand der Fig. 4 und 5 wird das Frequenzverhalten eines qualitativ schlechten Elektromotors (Fig. 4) und qualitativ guten Elektromotors (Fig. 5) erläutert. In der Fig. 4 (A) ist der Zeitverlauf des Schwankungssignals für einen Zeitraum von 0 bis 24 msec dargestellt. In der Fig. 4 (B) ist das Schwankungssignal für einen Zeitraum von 0 bis 120 msec dargestellt. Aufgrund relativ starken Verschleisses ist die Kollektorfrequenz, welche bei etwa 256 Hz (Fig. 4 C) liegt, nur schwach zu erkennen. Hingegen läßt sich aus dem Frequenzverhalten (Fig. 4 C), welche durch Fouriertransformation aus dem Zeitverlauf des Schwankungssignals (Fig. 4 A bzw. B) gewonnen wurde, die Umfangsfrequenz und insbesondere die doppelte Umfangsfrequenz bei ca. 40 Hz exakt bestimmen. Durch Inbeziehungsetzen mit der Kollektorfrequenz und der bei 60 Hz liegenden dreifachen Umfangsfrequenz gewinnt man eine exakte Bestimmung der Drehzahl des Elektromotors. Auch dann, wenn dieser durch Verschleiß eine relativ schlechte Qualität aufweist.

Für den qualitativ guten Motor sind in der Fig. 5 die Zeitverläufe des Schwankungssignals in der Darstellung (A) von 0 bis 30 msec und in der Darstellung (B) für 0 bis 160 msec dargestellt. In den Darstellungen (C) und (D) ist das Frequenzverhalten, welches durch Fouriertransformation erhalten wurde, dargestellt. In der Darstellung (C) sieht man deutlich bei 200 Hz eine scharf ausgebildete Amplitude für die Kollektorfrequenz. In der vergrößerten Darstellung (D) des Frequenzverhaltens sieht man das Amplitudenspektrum für die Umfangsfrequenz, welche bei 16.6 Hz liegt. Bei der vierfachen Umfangsfrequenz (66,4 Hz) sieht man eine relativ deutliche Amplitude. Bei dem qualitativ guten Motor der Fig. 5 läßt sich allein aufgrund der Kollektorfrequenz die Drehzahl exakt ermitteln. Zur Kontrolle können jedoch die Umfangsfrequenzen in Korrelation hierzu gesetzt werden.

Aus der Erläuterung der Fig. 4 und 5 ergibt sich ferner, daß eine Motordiagnose, insbesondere im Hinblick auf Motorqualität aus dem Frequenzverhalten gewonnen werden kann. Insbesondere dann, wenn sich bei einem Vergleich der Amplitude des Amplitudenspektrums, welche insbesondere der Kollektorfrequenz entspricht, relativ niedrig ausgebildet ist, ist dies ein Anzeichen eines qualitativ schlechten Motors. In diesem Fall ist es erforderlich, viele nicht allzu stark ausgeprägte Amplituden des Amplitudenspektrums, insbesondere der Umfangsfrequenz zugeordnete Amplituden auszuwählen, um die Drehzahl zu ermitteln, wie das anhand der Fig. 4 erläutert wurde.

### [Bezugszeichenliste]

- 1: Gleichstrom-Kommutatormotor
- 2: Leistungseinstelleinrichtung
- 3: Drehzahlberechnungseinheit
- 4: Stellsignalgeber
- 5: Frequenzanalyseeinrichtung
- 6: Auswerteeinrichtung
- 7: Korrekturrechner
- 8: Korrektureinrichtung
- 9: Motorparameter
- 10: Motorstrom
- 11: Motorspannung
- 12: Drehzahl-Istwert
- 13: Frequenzverhalten
- 14: genaue Drehzahl
- 15: Korrektursignal
- 16: korrigierter Drehzahl-Istwert
- 17: Drehzahl-Sollwert
- 18: Stellsignal
- 19: Motorzuleitung
- 20: Regeleinheit
- 21: Aufbereitungseinrichtung
- 22: elektrisches Schwankungssignal

## Patentansprüche

1. Verfahren zur Messung der Drehzahl eines GleichstromKommutatormotors, bei dem vom Motor verursachte elektrische Signalschwankungen ausgewertet werden, wobei vor der Auswertung aus den Signalschwankungen durch Signalaufbereitung ein Schwankungssignal gebildet wird, das zur Ermittlung der Drehzahl ausgewertet wird, dadurch gekennzeichnet, daß aus dem Zeitverlauf des elektrischen Schwankungssignals mittels Frequenzanalyse das Frequenzverhalten des Signals ermittelt und durch Vergleich des Frequenzverhaltens mit einem oder mehreren Frequenzfenster(n), innerhalb welchem bzw. welchen die der Motordrehzahl entsprechende Frequenz liegt, die Drehzahl ermittelt wird.

2. Verfahren nach Anspruch 1, dadurch gekennzeichnet, daß aus Motorparametern und Motorsignalen, welche vom Motor verursachte elektrische Signalschwankungen aufweisen, das bzw. die Frequenzfenster gebildet wird bzw. werden.

3. Verfahren nach Anspruch 1 oder 2, dadurch gekennzeichnet, daß als Motorsignale der Motorstrom oder ein dem Motorstrom entsprechender elektrischer Meßwert und/oder die über den Motor gemessene Motorspannung und/oder die Motor-EMK, verwendet werden.

4. Verfahren nach einem der Ansprüche 1 bis 3, dadurch gekennzeichnet, daß als Motorparameter feste Motordaten, wie Kollektorlamellenzahl und/oder die maximale Drehzahl und/oder die Polpaarzahl des Motors verwendet wird, bzw. werden.

5. Verfahren nach einem der Ansprüche 1 bis 4, dadurch gekennzeichnet, daß bei der Frequenzanalyse eine FourierTransformation des elektrischen Schwankungssignals zur Bildung eines das Frequenzverhalten des Signals wiedergebenden Amplitudenspektrums durchgeführt wird.

6. Verfahren nach einem der Ansprüche 1 bis 5, dadurch gekennzeichnet, daß für die Drehzahlermittlung die größte Amplitude des Amplitudenspektrums verwendet wird.

7. Verfahren nach einem der Ansprüche 1 bis 6, dadurch gekennzeichnet, daß die größte Amplitude des Amplitudenspektrums in dem durch Motorstrom und/oder Motorspannung vorgegebenen Bereich für die Drehzahlermittlung verwendet wird.

8. Verfahren nach einem der Ansprüche 1 bis 7, dadurch gekennzeichnet, daß mehrere maximale Amplituden des Amplitudenspektrums zueinander in Beziehung gesetzt werden.

9. Verfahren nach einem der Ansprüche 5 bis 8, dadurch gekennzeichnet, daß zur Erhöhung der Frequenzauflösung ein Frequenzschwerpunkt mit den Amplituden mehrerer Frequenzen um die ermittelte Frequenz gebildet wird.

10. Verfahren nach einem der Ansprüche 1 bis 9, dadurch gekennzeichnet, daß die Frequenzanalyse in mehreren Stufen durchgeführt wird.

11. Verfahren nach einem der Ansprüche 1 bis 10, dadurch gekennzeichnet, daß nach jedem Rechengang das Ergebnis auf weniger als das Theoretische normiert wird.

12. Verfahren nach einem der Ansprüche 1 bis 11, dadurch gekennzeichnet, daß eine bestimmte Anzahl von Werten des Schwankungssignals für die jeweilige Frequenzanalyse verwendet werden.

13. Verfahren nach Anspruch 12, dadurch kennzeichnet, das die bestimmte Anzahl der Werte des Schwankungssignals innerhalb gleichbleibender periodischer Zeiträume abgetastet und für die Auswertung gespeichert werden.

14. Verfahren nach einem der Ansprüche 1 bis 13, dadurch gekennzeichnet, daß als elektrisches Schwankungssignal ein aus dem Motorstrom abgeleitetes Stromschwankungssignal verwendet wird.

15. Verfahren nach einem der Ansprüche 1 bis 13, dadurch gekennzeichnet, daß das elektrische Schwankungssignal aus einer am Motor abgenommenen elektrischen Spannung gebildet wird.

16. Verfahren nach einem der Ansprüche 1 bis 13, dadurch gekennzeichnet

17. Verfahren nach einem der Ansprüche 1 bis 16, dadurch gekennzeichnet, daß die bei der Frequenzanalyse ermittelte Drehzahl zur Abstimmung einer Motordrehzahlerfassung verwendet wird.

18. Verfahren nach Anspruch 3 und 17, dadurch gekennzeichnet, daß aus der bei der Frequenzanalyse ermittelten Drehzahl ein Korrektursignal für den aus den Motorsignalen berechneten Drehzahl-Istwert zur Abstimmung der Motordrehzahlerfassung gebildet wird.

19. Verfahren nach einem der Ansprüche 1 bis 18, dadurch gekennzeichnet, daß die Korrektur des Drehzahl-Istwertes zeitlich nach einer jeweiligen Bestimmung der genauen Drehzahl durch die Frequenzanalyse durchgeführt wird.

20. Verfahren nach Anspruch 18 oder 19, dadurch gekennzeichnet, daß das Korrektursignal geglättet wird.

21. Verfahren nach einem der Ansprüche 18 bis 20, dadurch gekennzeichnet, daß das Korrektursignal auf Plausibilität überprüft wird.

22. Verfahren nach einem der Ansprüche 18 bis 21, dadurch gekennzeichnet, daß der korrigierte Drehzahl-Istwert bei der Motordrehzahlregelung mit einem Drehzahl-Sollwert verglichen wird.

23. Verfahren nach einem der Ansprüche 1 bis 22, dadurch gekennzeichnet, daß in Abhängigkeit von der ermittelten Drehzahl der Gleichstrommotor so gesteuert wird, daß bestimmte Drehzahlen, insbesondere Resonanzen eines vom Motor beeinflussten Systems ausgeblendet werden.

24. Verfahren nach einem der Ansprüche 1 bis 16, dadurch gekennzeichnet, daß das Frequenzverhalten für eine Motordiagnose verwendet wird.

25. Verfahren nach Anspruch 24, dadurch gekennzeichnet, daß die Amplitude des Amplitudenspektrums, welche der ermittelten Drehzahl entspricht, mit den anderen Amplituden für die Motordiagnose verglichen wird.

26. Vorrichtung zur Messung der Drehzahl eines Gleichstromkommutatormotors mit einer Aufbereitungsschaltung zur Bildung eines elektrischen Schwankungssignals aus dem Motor verursachten elektrischen Signalschwankungen und einer Auswerteeinrichtung, welche aus dem Schwankungsignal die Motordrehzahl ermittelt, gekennzeichnet durch
- eine Frequenzanalyseeinrichtung (5), welche aus dem elektrischen Schwankungssignal ein Amplitudenspektrum bildet;
- eine Drehzahlberechnungseinheit (3), welche aus Motorsignalen einen Drehzahl-Istwert mit einem Werteschwankungsbereich berechnet;
- die Auswerteeinrichtung (6), welche das Amplitudenspektrum von der Frequenzanalyseeinrichtung (5) und den mit dem Werteschwankungsbereich behafteten Drehzahl-Istwert zur Bildung eines Frequenzfensters empfängt und mit festen Motorparametern (Motordaten) zur Ermittlung der Drehzahl in Bezug setzt.

27. Vorrichtung nach Anspruch 23, dadurch gekennzeichnet, daß die Auswerteeinrichtung (6) mit einem Korrekturrechner (7) verbunden ist, welcher aus der ermittelten Drehzahl ein Korrektursignal berechnet, welches an eine an die Drehzahlberechnungseinheit (3) angeschlossene Korrektureinrichtung (8) zur Korrektur des Drehzahl-Istwertes weitergeleitet wird, und daß ein Stellsignalgeber (4) den korrigierten Drehzahl-Istwert und einen Drehzahl-Sollwert empfängt zur Bildung eines die Motordrehzahl regelnden Stellsignals.
